# EUROPÄISCHE PATENTSCHRIFT

(11) **EP 4 406 781 B1**
(45) Veröffentlichungstag und Bekanntmachung des Hinweises auf die Patenterteilung: **20.11.2024**
(21) Anmeldenummer: 23192476.2
(22) Anmeldetag: 21.08.2023
(51) Int. Cl.: B60Q 1/00, B60Q 1/22, B60R 11/04, B60D 1/58, B60D 1/64, B60Q 1/30

(54) **RÜCKFAHRKAMERA UND RÜCKLEUCHTE MIT INTEGRIERTER RÜCKFAHRKAMERA**
REAR VIEW CAMERA AND REAR LIGHT WITH INTEGRATED REAR VIEW CAMERA
CAMÉRA ARRIÈRE ET FEU ARRIÈRE AVEC CAMÉRA ARRIÈRE INTÉGRÉE

(30) Priorität: 24.01.2023 DE 202023100338 U
(43) Veröffentlichungstag der Anmeldung: 31.07.2024
(73) Patentinhaber: Rüttgerodt, Werner, 34355 Staufenberg (DE)
(72) Erfinder: Rüttgerodt, Werner, 34355 Staufenberg (DE)
(74) Vertreter: REHBERG HÜPPE + PARTNER

(56) Entgegenhaltungen:
- WO-A1-2016/107608
- JP-A- 2008 024 216
- JP-A- H11 198 724
- US-A1- 2003 090 569
- US-A1- 2007 236 364
- US-A1- 2018 334 081

## Beschreibung

Die Erfindung bezieht sich auf eine Rückfahrkamera und auf eine Rückleuchte mit integrierter Rückfahrkamera.

Viele Kraftfahrzeuge sind mit Rückfahrkameras ausgestattet, um dem Fahrer beim Rückwärtsfahren auftretende Hindernisse anzuzeigen, damit eine Kollision mit diesen Hindernissen vermieden werden kann.

Häufig blockieren etwaige Anbauten an das Heck des jeweiligen Kraftfahrzeugs das Blickfeld solcher Rückfahrkameras.

### STAND DER TECHNIK

Bei einer bekannten Rückleuchte mit integrierter Rückfahrkamera ist die Rückfahrkamera in einer Aussparung in der lichtdurchlässigen Abdeckung der Rückleuchte montiert, so dass ihr Kameraobjektiv nach außen frei liegt.

Es sind nachrüstbare Rückfahrkameras für Kraftfahrzeuge bekannt, die zur Montage hinter einer Heckscheibe des jeweiligen Kraftfahrzeugs vorgesehen sind.

Es ist bekannt, eine Rückfahrkamera eines Kraftfahrzeugs an elektrische Leitungen anzuschließen, die zu einer Rückfahrleuchte für Rückfahrlicht des Kraftfahrzeugs führen, um die Rückfahrkamera beim Einlegen des Rückwärtsgangs des jeweiligen Kraftfahrzeugs zu aktivieren, weil dann die Rückfahrleuchte bestromt wird.

Insbesondere bei nachtrüstbaren Rückfahrkameras für Kraftfahrzeuge ist es bekannt, die Bilddaten von der Rückfahrkamera über eine Schnittstelle zur drahtlosen Kommunikation der Rückfahrkamera mit einer Bildanzeigeeinrichtung an die Bildanzeigeeinrichtung zu übermitteln. Beispielsweise kann die drahtlose Kommunikation nach dem Bluetooth- oder WIFI-Standard erfolgen.

Aus der US 2007/0236364 A1 sind ein Anschluss einer Rückfahrkamera an die Stromversorgung für einen Rückfahrscheinwerfer und eine drahtlose Übertragung der Bilder der Rückfahrkamera an eine Anzeigevorrichtung bekannt. Die Rückfahrkamera ist in den Rahmen einer Kennzeichenhalterung integriert.

Eine Rückleuchte mit integrierter Rückfahrkamera ist aus der US 2007/0017642 A1 bekannt. Die Rückfahrkamera ist in eine Mehrkammerrückleuchte, unterhalb deren transparenten Abdeckung integriert. Die Rückfahrkamera ist direkt auf einer Platine der Rückleuchte montiert.

Eine aus der JP 2008 024216 A bekannte Mehrkammerrückleuchte weist mehrere ortsfest an einem Leuchtengehäuse gelagerte Leuchtmittel, eine ebenfalls ortsfest, aber um eine Schwenkachse verschwenkbar an dem Leuchtengehäuse gelagerte Rückfahrkamera und eine lichtdurchlässige Abdeckung auf, die vor der Rückfahrkamera farblos, klar und unstrukturiert ist. Die ortsfeste Lagerung der Leuchtmittel und der Kamera erfolgt über Montageflansche mit radialen Vorsprüngen, die an die Leuchtmittel beziehungsweise die Kamera angesetzt sind und die in entsprechenden Befestigungsbereichen des Leuchtengehäuses verriegelt sind.

Aus der US 2007/236364 A1 ist ein Nachrüstset zum Nachrüsten eines Kraftfahrzeugs mit einer Rückfahrkamera bekannt. Das Nachrüstset weist eine Rückfahrkamera, ein einerseits an die Rückfahrkamera und andererseits an einen Sender angeschlossenes Kabel, eine von dem Sender zu einem Abzweigverbinder führende Anschlussleitung, wobei die Anschlussleitung über den Abzweigverbinder mit einer zu einer Rückfahrleuchte des Kraftfahrzeugs führenden Versorgungsleitung verbunden ist, und eine weitere Anschlussleitung auf, die den Sender mit der elektrischen Masse des Kraftfahrzeugs verbindet. Die Rückfahrkamera ist zur ortsfesten Lagerung am Rahmen eines rückwärtigen Kennzeichenschildhalters des Kraftfahrzeugs ausgebildet. Die von der Rückfahrkamera aufgenommenen Bilder werden von dem Sender drahtlos an eine externe Bildanzeigeeinrichtung übermittelt, die einen auf dem Armaturenbrett des Kraftfahrzeugs angeordneten Bildschirm umfasst. Der Sender ist im Kofferraum des Kraftfahrzeugs angeordnet. Alternativ kann der Sender auf der Außenseite des Fahrzeugs angeordnet sein, beispielsweise am rückwärtigen Stoßfänger, an einem Rahmenelement auf der Unterseite des Fahrzeugs, an einem Fahrzeugpanel oder an einer anderen geeigneten Struktur.

Aus der DE 20 2012 104 249 U1, der DE 20 2011 106 274 U1 und der DE 10 2004 035 027 A1 sind Überwachungskameras zur Montage in Lampenfassungen bekannt. Über die jeweilige Lampenfassung werden die Überwachungskameras mit Strom versorgt. In der DE 20 2012 104 249 U1 ist eine Verschwenkbarkeit der Überwachungskamera gegenüber ihrem in die Lampenfassung eingreifenden Sockel bekannt. Die DE 10 2004 035 027 A1 offenbart eine drahtlose Bilddatenübertragung von der Überwachungskamera.

### AUFGABE DER ERFINDUNG

Der Erfindung liegt die Aufgabe zugrunde, eine Rückfahrkamera und eine Rückleuchte mit integrierter Rückfahrkamera aufzuzeigen, die insbesondere für Fahrradträger und andere Heckanbauten an Kraftfahrzeuge sowie für Kfz-Anhänger geeignet und mit geringem Aufwand nachrüstbar sind.

### LÖSUNG

Die Aufgabe der Erfindung wird durch eine Rückfahrkamera mit den Merkmalen des unabhängigen Patentanspruchs 1 gelöst. Die abhängigen Patentansprüche 2 bis 4 betreffen bevorzugte Ausführungsformen der erfindungsgemäßen Rückfahrkamera. Die abhängigen Patentansprüche 5 und 6 betreffen ein Nachrüstset zum Nachrüsten einer Rückleuchte mit der erfindungsgemäßen Rückfahrkamera. Die abhängigen Patentansprüche 7 bis 12 betreffen eine erfindungsgemäße Rückleuchte mit der erfindungsgemäßen Rückfahrkamera. Der abhängige Patentanspruch 13 betrifft ein Paar von Rückleuchten, von denen mindestens eine eine erfindungsgemäße Rückleuchte ist. Die abhängigen Patentansprüche 14 und 15 betreffen einen an ein Kraftfahrzeug anbaubaren Lastenträger, insbesondere einen Fahrradträger, und einen Kfz-Anhänger mit einem solchen Paar von Rückleuchten.

### BESCHREIBUNG DER ERFINDUNG

Eine erfindungsgemäße Rückfahrkamera mit einem Kameraobjektiv und einer Schnittstelle zur drahtlosen Kommunikation von Bildern der Rückfahrkamera an eine externe Bildanzeigeeinrichtung weist einen in eine für ein Leuchtmittel einer Rückfahrleuchte einer Rückleuchte eines Kraftfahrzeugs vorgesehene Fassung passenden Sockel auf, der dazu ausgebildet ist, die Rückfahrkamera in der Fassung ortsfest zu lagern und über die Fassung elektrisch zu kontaktieren. Dabei kann eine mittlere Blickrichtung der Rückfahrkamera gegenüber dem Sockel verstellbar sein. Für unterschiedliche Fassungen in den Rückfahrleuchten unterschiedlicher Rückleuchten sind unterschiedliche erfindungsgemäße Rückfahrkamera mit unterschiedlichen passenden Sockel oder alternativ unterschiedliche Adapter vorzusehen.

Bei einer erfindungsgemäßen Rückleuchte mit einem Leuchtengehäuse, das einen Gehäusegrundkörper und eine lichtdurchlässige Abdeckung aufweist, einem in dem Leuchtengehäuse angeordneten Leuchtmittel und der erfindungsgemäßen Rückfahrkamera ist die Rückfahrkamera in dem Leuchtengehäuse hinter einem farblosen, klaren und unstrukturierten Bereich der lichtdurchlässigen Abdeckung angeordnet. Bei diesem farblosen, klaren und unstrukturierten Bereich der lichtdurchlässigen Abdeckung handelt es sich um insbesondere um denjenigen, der einer Rückfahrleuchte zugeordnet ist, welche auch als Rückfahrscheinwerfer bezeichnet wird. Die Rückfahrkamera ist in einer Fassung für ein Leuchtmittel der Rückfahrleuchte ortsfest gelagert, und sie wird über die Fassung elektrisch kontaktiert. Dazu weist die Rückfahrkamera ihren in die Fassung passenden Sockel auf.

Die Rückfahrkamera ist komplett in die erfindungsgemäße Rückleuchte integriert. Auch ihr Kameraobjektiv liegt nicht frei, sondern in dem Leuchtengehäuse hinter der lichtdurchlässigen Abdeckung. Die Rückfahrkamera ist damit genauso von der Abdeckung geschützt, wie jedes Leuchtmittel der Rückleuchte. Zudem ermöglichen es die Bilder der Rückfahrkamera, beim Rückwärtsfahren eine Kollision der Rückleuchte mit etwaigen Hindernissen zu verhindern.

Dass eine herkömmliche Rückfahrkamera durch einen farblosen, klaren und unstrukturierten Bereich der lichtdurchlässigen Abdeckung eines Leuchtengehäuse, die in aller Regel aus Kunststoff ausgebildet ist, hindurch voll funktionsfähig ist, ist überraschend. Insbesondere ist die Funktionsfähigkeit der Rückfahrkamera auch dann gegeben, wenn die Rückfahrkamera in einem gewissen Abstand hinter der lichtdurchlässigen Abdeckung liegt und auch dann, wenn ihre mittlere Blickrichtung nicht senkrecht zu der Oberfläche der lichtdurchlässigen Abdeckung ausgerichtet ist. Allerdings ist es bevorzugt, wenn ein vor dem Kameraobjektiv liegender Teilbereich der Abdeckung durch planparallele Oberflächen begrenzt ist.

In jedem Fall blickt die Rückfahrkamera durch eine Fläche der lichtdurchlässigen Abdeckung hindurch, die größer als die äußere Oberfläche ihres Kameraobjektivs ist. Dies ist mit dem Vorteil verbunden, dass die Rückfahrkamera weniger schnell durch Verschmutzung der lichtdurchlässigen Abdeckung in ihrer Funktion eingeschränkt wird als bei direkter Verschmutzung eines frei liegenden Kameraobjektivs.

Es ist auch von Vorteil, dass die hinter der lichtdurchlässigen Abdeckung angeordnete Rückfahrkamera nicht punktuell vorsteht und damit besonderen Kollisionsgefahren ausgesetzt ist, wie dies bei bekannten Rückleuchten mit integrierter Rückfahrkamera der Fall ist.

Das Leuchtengehäuse der erfindungsgemäßen Rückleuchte kann neben einer Kammer der Rückfahrleuchte Kammern einer Schlussleuchte, einer Bremsleuchte, eines Fahrtrichtungsanzeigers und optional auch einer Nebelschlussleuchte aufweisen. Anders gesagt kann es sich bei der Rückleuchte um eine sogenannte Vier- oder Fünfkammernleuchte handeln.

Die Rückfahrkamera der erfindungsgemäßen Rückleuchte kann derart an mindestens eine elektrische Leitung, die zum dem Leuchtmittel der Rückfahrleuchte führt, angeschlossen sein, dass die Rückfahrleuchte beim Bestromen des Leuchtmittels der Rückfahrleuchte über die mindestens eine elektrische Leitung aktiviert wird. Dieses Aktivieren kann bedeuten, dass die Rückfahrkamera überhaupt nur dann mit elektrischer Energie versorgt wird, wenn das Leuchtmittel der Rückfahrleuchte bestromt wird. Alternativ kann es bedeuten, dass die Rückfahrkamera zwar an eine dauerhafte Stromversorgung angeschlossen ist, aber nur dann zum Aufnehmen und Übermitteln von Bildern aktiviert wird, wenn das Leuchtmittel der Rückfahrleuchte bestromt wird. Besonders bevorzugt ist es, wenn die Rückfahrkamera an eine Fahrlichtleitung angeschlossen ist, so dass sie immer dann, wenn das Fahrlicht eingeschaltet ist, mit Strom versorgt wird. Das Aktivieren der Rückfahrkamera zum Aufnehmen und Übermitteln von Bildern kann dann jederzeit sehr schnell erfolgen, beispielsweise von einer Bildanzeigeeinrichtung aus, auf der die mit der Rückfahrkamera aufgenommenen Bilder einem Benutzer angezeigt werden.

Die Rückfahrkamera ist in einer Fassung, die eigentlich für ein Leuchtmittel der Rückleuchte, konkret für das Leuchtmittel deren Rückfahrleuchte vorgesehen ist, ortsfest gelagert und elektrisch kontaktiert. Dies kann auf Basis einer herkömmlichen Rückleuchte realisiert werden, indem die Rückfahrkamera in die Fassung für das Leuchtmittel der Rückfahrleuchte montiert wird. Dabei ist dafür zu sorgen, dass der Bereich der Abdeckung der Rückfahrleuchte vor dem Kameraobjektiv der Rückfahrkamera klar und unstrukturiert ist. Soweit sie keine weitere Fassung für ein Leuchtmittel aufweist, wird die Rückfahrleuchte der Rückleuchte dadurch zwar als Rückscheinwerfer inaktiviert. Es ist aber grundsätzlich ausreichend, wenn von einem Paar von Rückleuchten eines Kraftfahrzeugs, eines Kraftfahrzeuganhängers oder eines Kraftfahrzeuganbaus nur eine Rückleuchte über eine aktive Rückfahrleuchte verfügt. Die Rückfahrkamera weist zur Montage in der Fassung, die eigentlich für ein Leuchtmittel vorgesehen ist, einen in die Fassung passenden Sockel auf. Dabei kann eine mittlere Blickrichtung der Rückfahrkamera gegenüber dem Sockel verstellbar sein, um diese Blickrichtung der Rückfahrkamera nach Bedarf justieren zu können. Alternativ oder zusätzlich kann die mittlere Blickrichtung der Rückfahrkamera gegenüber dem Sockel eine von der Bauart der Rückleuchte und insbesondere deren Rückfahrleuchte abhängige Grundausrichtung aufweisen. So kann die Grundausrichtung der Blickrichtung der Rückfahrkamera insbesondere koaxial bzw. parallel oder rechtwinklig zu einer Einsteckrichtung des Sockels in die Fassung der Rückfahrleuchte sein.

Eine mittlere Blickrichtung der Rückfahrkamera kann unter einem Winkel von 0 bis 45° zu einer Oberflächennormale des Bereichs der lichtdurchlässigen Abdeckung angeordnet sein. Vorzugsweise ist die mittlere Blickrichtung der Rückfahrkamera unter einem Winkel von 5° bis 30° zu der Oberflächennormalen ausgerichtet.

Die Rückfahrkamera kann in dem Leuchtengehäuse in einem Abstand von 0 bis 5 cm hinter der lichtdurchlässigen Abdeckung angeordnet sein. Vorzugsweise ist sie in einem Abstand von 1 bis 3 cm hinter der lichtdurchlässigen Abdeckung angeordnet. Der Abstand bezieht sich auf den freien Abstand zwischen dem Kameraobjektiv und der lichtdurchlässigen Abdeckung. Um den freien Abstand auf eine gewünschte Größe einzustellen, kann ein Abstand der Rückfahrkamera zu dem Sockel in der mittleren Blickrichtung der Rückfahrkamera verstellbar sein. Dazu kann die eigentliche Rückfahrkamera in einem Rückfahrkameragehäuse in der Blickrichtung verlagerbar und in ihrer durch Verlagerung erreichten Position arretierbar sein.

Die Schnittstelle der Rückfahrkamera zur drahtlosen Kommunikation der Rückfahrkamera mit einer externen Bildanzeigeeinrichtung ist in dem Leuchtengehäuse angeordnet. Konkret kann die Schnittstelle, die zum Beispiel nach einem Bluetooth- oder WIFI-Standard arbeiten kann, eine aus einem Gehäuse der Rückfahrkamera herausführende flexible Antenne aufweisen, die aber in aller Regel nicht aus der Rückleuchte herausgeführt wird. Die externe Bildanzeigeeinrichtung ist insoweit extern, als dass sie außerhalb der Rückleuchte angeordnet ist und vorzugsweise in dem jeweiligen Kraftfahrzeug im Blickfeld des Fahrers des Kraftfahrzeugs angeordnet wird.

Das Leuchtengehäuse der erfindungsgemäßen Rückleuchte ist vorzugsweise zumindest spritzwasserdicht und schützt damit die Rückfahrkamera vor Umwelteinflüssen. So kann als Rückfahrkamera auch eine ihrerseits nicht abgedichtete Kamera Verwendung finden, die normalerweise für einen Einsatz als Rückfahrkamera bei einem Kraftfahrzeug nicht geeignet ist.

Die erfindungsgemäße Rückleuchte weißt typischerweise ein Anschlusskabel mit einem Stecker auf, der zum Einstecken in eine Anhängersteckdose ausgebildet ist, um die Rückleuchte daran anzuschließen. Der Stecker kann insbesondere ein normierter 7-poliger, 13-poliger oder 15-poliger Stecker sein, wobei die Rückfahrkamera auf die über einen solchen Stecker von der Fahrzeugelektrik eines PKW oder LKW üblicherweise angelegte Spannung abgestimmt ist. Typischerweise schließt das Anschlusskabel ein Paar von Rückleuchten an die Anhängersteckdose an, die jeweils eine Schlussleuchte, eine Bremsleuchte, einen Fahrtrichtungsanzeiger, eine Rückfahrleuchte und optional auch eine Nebelschlussleuchte umfassen.

Bei einem erfindungsgemäßen Paar von Rückleuchten weist zumindest eine der Rückleuchten eine erfindungsgemäß integrierte Rückfahrkamera auf. Dabei kann die Rückfahrleuchte der Rückleuchte mit der Rückfahrkamera als Rückfahrleuchte deaktiviert sein, weil in der Fassung für ihr Leuchtmittel die Rückfahrkamera gelagert und elektrisch kontaktiert ist. Die andere Rückfahrleuchte des Paars von Rückleuchten ist dann mit einem Leuchtmittel bestückt und als Rückfahrleuchte aktiv.

Ein erfindungsgemäßer an ein Kraftahrzeug z. B über eine Anhängerkupplung anbaubarer Lastenträger für Fahrräder und andere Lasten und ein erfindungsgemäßer Kfz-Anhänger weisen jeweils ein erfindungsgemäßes Paar von Rückleuchten auf, von denen zumindest eine erfindungsgemäß integrierte Rückfahrkamera aufweist.

Ein erfindungsgemäßes Nachrüstset zum Nachrüsten einer Rückleuchte mit einer Rückfahrkamera weist neben einer erfindungsgemäßen Rückfahrkamera einen Abzweigverbinder und eine einerseits mittels des Abzweigverbinders mit einer Fahrlichtleitung verbindbare und andererseits an eine Fassung für ein Leuchtmittel einer Rückfahrleuchte einer Rückleuchte eines Kraftfahrzeugs anschließbare Anschlussleitung auf.

Weiterhin kann das Nachrüstset eine lichtdurchlässige Abdeckung für ein Leuchtengehäuse umfassen, die einen farblosen, klaren und unstrukturierten Bereich aufweist, der einer Rückfahrleuchte in dem Leuchtengehäuse zugeordnet ist. Wenn die originale Abdeckung des Leuchtengehäuses keinen farblosen, klaren und unstrukturierten Bereich für die Rückfahrleuchte aufweist, ist für das Nachrüsten einer Rückleuchte mit der erfindungsgemäßen Rückfahrkamera der Austausch der originalen Abdeckung erforderlich.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Leuchtmittel die Rede ist, ist dies so zu verstehen, dass genau ein Leuchtmittel, zwei Leuchtmittel oder mehr Leuchtmittel vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine rückwärtige Draufsicht auf eine erfindungsgemäße Rückleuchte.
- **Fig. 2**: ist ein vertikaler Schnitt durch eine Rückfahrleuchte der Rückleuchte gemäß Fig.1.
- **Fig. 3**: zeigt schematisch einen erfindungsgemäßen an einer Anhängerkupplung angebauten Lastenträger.
- **Fig. 4**: zeigt schematisch einen erfindungsgemäßen Kfz-Anhänger; und
- **Fig. 5**: zeigt ein erfindungsgemäßes Nachrüstset mit einer erfindungsgemäßen Rückfahrkamera.

### FIGURENBESCHREIBUNG

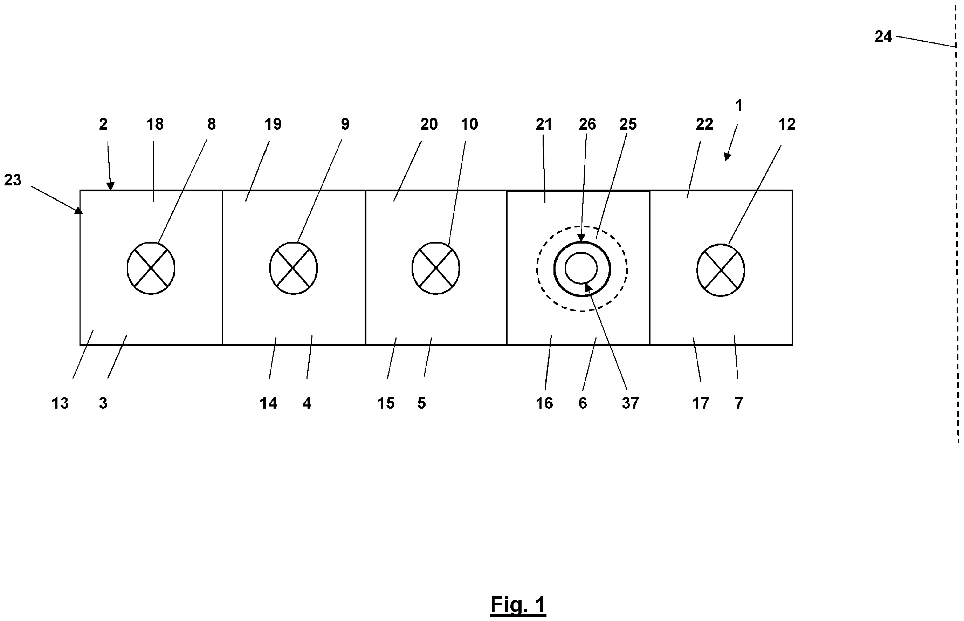

Die in **Fig. 1** dargestellte Rückleuchte 1 weist ein Leuchtengehäuse 2 mit fünf neben einander angeordneten Kammern 3 bis 7 auf. Jeder Kammer ist zur Aufnahme eines Leuchtmittels 8 bis 12 ausgebildet. Die Leuchtmittel 8 bis 12 sind ebenso wie Bereiche 13 bis 17 einer lichtdurchlässigen Abdeckung 23 des Leuchtengehäuses 2 auf verschiedene Leuchten 18 bis 22 abgestimmt, die mit den Kammern 3 bis 7 ausgebildet werden. Hierbei handelt es sich in Bezug auf eine Fahrzeuglängsmittelebene 24, auf deren einen Seite die Rückleuchte 1 angeordnet ist, von außen nach innen um eine Schlussleuchte 18, eine Bremsleuchte 19, einen Fahrtrichtungsanzeiger 20, eine Rückfahrleuchte 21 und eine grundsätzlich optionale Nebelschlussleuchte 22. In dem Bereich 16 der Rückfahrleuchte 21 ist die Abdeckung 23 farblos und klar. In einer hier nicht sichtbaren Fassung, die eigentlich für das Leuchtmittel der Rückfahrleuchte 21 vorgesehen ist, ist eine Rückfahrkamera 26 montiert. Dabei ist vor der Rückfahrkamera 26 ein unstrukturierter und durch planparallele Oberflächen begrenzter Teilbereich 25 des Bereichs 16 der Abdeckung 23 angeordnet. Eine auf der anderen Seite der Längsmittelebene 24 angeordnete, hier nicht dargestellte weitere Rückleuchte 1 weist hingegen keine Rückfahrkamera 26, sondern ein Leuchtmittel in der Fassung ihrer Rückfahrleuchte 21 auf.

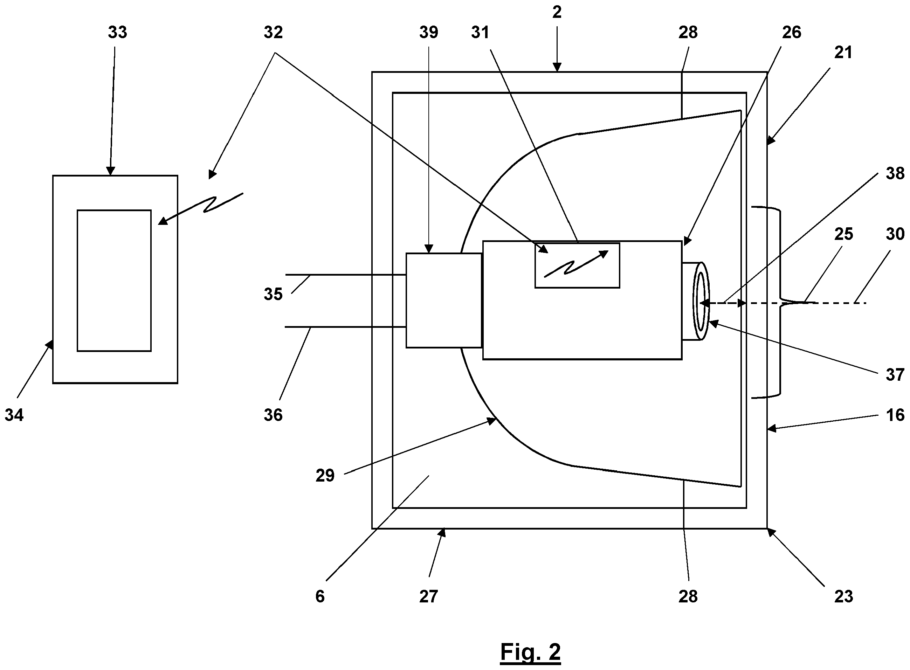

Der vertikale Schnitt durch das Leuchtengehäuse 2 gemäß **Fig. 2** zeigt dessen Aufbau aus einem Gehäusegrundkörper 27 und der lichtdurchlässigen Abdeckung 23, zwischen denen eine Dichtung 28 angeordnet ist, so dass das Leuchtengehäuse 2 zumindest spritzwasserdicht ist. Statt eines Leuchtmittels ist die Rückfahrkamera 26 in eine Fassung 39 der Rückfahrleuchte 21 montiert und innerhalb eines Reflektors 29 angeordnet. Vor der Rückfahrkamera 26 liegt der verzerrungsfrei transparente Teilbereich 25 des Bereichs 16 der Abdeckung 23. Die mittlere Blickrichtung 30 der Rückfahrkamera 26 verläuft hier senkrecht zu den Oberflächen der Abdeckung 23. Die Rückfahrkamera 26 weist eine integrierte Schnittstelle 31 zur drahtlosen Kommunikation 32 mit einer Anzeigeeinrichtung 33 für mit der Rückfahrkamera 26 aufgenommene Bilder auf. Bei der Anzeigeeinrichtung kann es sich beispielsweise um ein sogenanntes Smartphone 34 oder ein anderes mobiles Endgerät handeln. Die Rückfahrkamera 26 ist über die Fassung 39 an elektrische Leitungen 35 und 36 angeschlossen und wird über diese Leitungen 35 und 36 mit elektrischer Energie versorgt und aktiviert. Die Leitung 35 kann zu dem Minuspol führen, an den auch ein Leuchtmittel der Rückfahrleuchte 21 angeschlossen wäre. Die Leitung 36 kann hingegen statt des Pluspols, an den auch ein Leuchtmittel der Rückfahrleuchte 21 angeschlossen wäre, zu dem Pluspol führen, an den das Leuchtmittel 8 der Schlussleuchte 18 angeschlossen ist, um die Rückfahrkamera 26 immer mit elektrischer Energie zu versorgen, wenn ein Fahrlicht eingeschaltet ist.

**Fig. 2** zeigt weiterhin, dass ein Kameraobjektiv 37 der Rückfahrkamera 26 in einem freien Abstand 38 zu einer Innenoberfläche der lichtdurchlässigen Abdeckung 23 angeordnet ist. Die mittlere Blickrichtung 30 der Rückfahrkamera 26 kann anders als dargestellt auch unter einem von 90° abweichenden Winkel 39 zu der Innenoberfläche der Abdeckung 23 ausgerichtet sein.

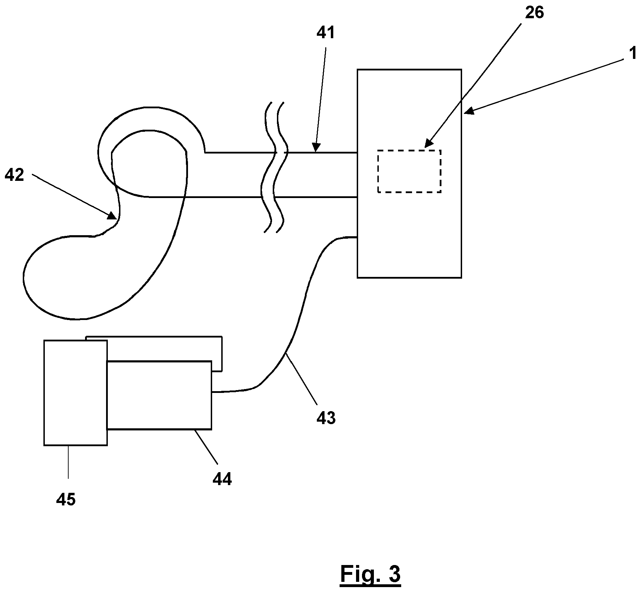

**Fig. 3** zeigt stark vereinfacht einen Lastenträger 41 angebaut an eine Anhängerkupplung 42. Der Lastträger 41 kann beispielsweise ein Fahrradträger sein, was hier aber nicht im Detail dargestellt ist, und weist eine erfindungsgemäße Rückleuchte 1 mit Rückfahrkamera 26 und eine weitere Rückleuchte auf, die in der Regel keine zusätzliche Rückfahrkamera 26 umfasst. Über ein Anschlusskabel 43 mit einem Stecker 44 sind die Rückleuchten an eine Anhängersteckdose 45 angeschlossen.

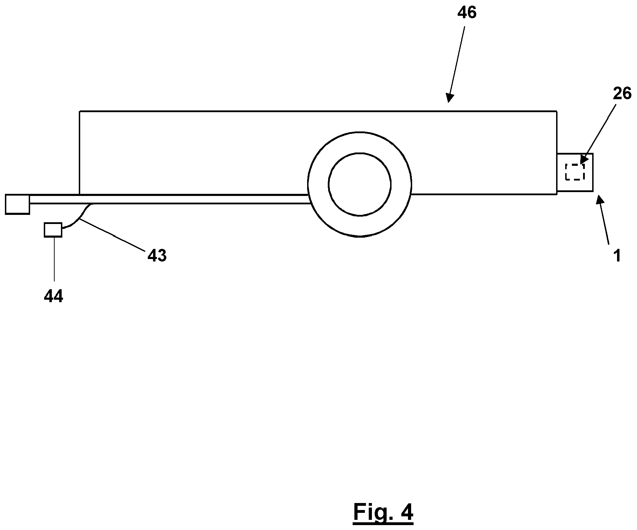

Ein in **Fig. 4** gezeigter erfindungsgemäßer Kfz-Anhänger 46 weist ebenfalls ein Paar von Rückleuchten auf, von denen eine erfindungsgemäße Rückleuchte 1 mit Rückfahrkamera 26 und die zweite in aller Regel eine Rückleuchte ohne Rückfahrkamera ist.

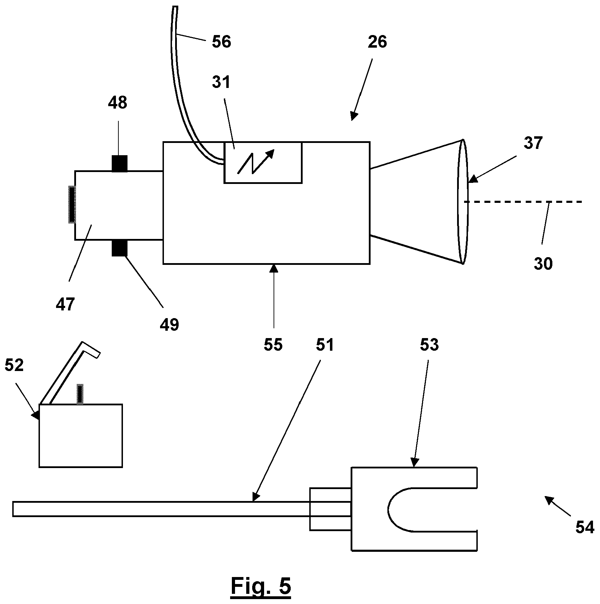

**Fig. 5** zeigt schematisch eine Rückfahrkamera 26 mit einem ortsfest angeordneten Sockel 47 mit elektrische Kontakten 40, 48 und 49 zur Montage und elektrischen Kontaktierung der Rückfahrkamera 26 in der eigentlich für ein Leuchtmittel der Rückfahrleuchte 21 vorgesehenen Fassung 39. Dabei sind die Größenverhältnisse der einzelnen Bestandteile der Rückfahrkamera 26 und des Sockels 47 nicht proportional dargestellt. Tatsächlich ist die Rückfahrkamera 26 insgesamt kaum größer als der Sockel 47. Aus einem Rückfahrkameragehäuse 55 der Rückfahrkamera 26 führt von der Schnittstelle 31 eine flexible Antenne 56 heraus, mit der die drahtlose Kommunikation mit der externen Anzeigeeinrichtung 33 stabilisiert wird.

Weiterhin zeigt Fig. 5 eine einadrige Anschlussleitung 51. Ein Ende dieser Anschlussleitung 21 kann über einen schematisch dargestellten Abzweigverbinder 52 an eine Fahrlichtleitung angeschlossen werden, die zu dem Pluspol führt, an welchen das Leuchtmittel 8 der Schlussleuchte 18 gemäß Fig. 1 angeschlossen ist. Mit einem Kabelschuh 53 am anderen Ende der Anschlussleitung 51 kann diese an die Fassung 39 angeschlossen werden. Im montierten Zustand bildet die Anschlussleitung 51 dann die in Fig. 2 gezeigte Leitung 36 aus. Die in Fig. 5 insgesamt gezeigten Bestandteile 26, 51 und 52 eines Nachrüstsets 54 zur Nachrüstung einer Rückleuchte 1 gemäß Fig. 1 mit der Rückfahrkamera 26 können um eine spezielle Abdeckung 23 mit verzerrungsfreiem transparentem Teilbereich 25 des klar transparenten Bereichs 16 der Rückfahrleuchte 21 ergänzt werden, wenn die originale Abdeckung der Rückleuchte 1 einen solchen Teilbereich 25 des Bereichs 16 nicht aufweist.

### BEZUGSZEICHENLISTE

- 1: Rückleuchte
- 2: Leuchtengehäuse
- 3: Kammer
- 4: Kammer
- 5: Kammer
- 6: Kammer
- 7: Kammer
- 8: Leuchtmittel
- 9: Leuchtmittel
- 10: Leuchtmittel
- 12: Leuchtmittel
- 13: Bereich
- 14: Bereich
- 15: Bereich
- 16: Bereich
- 17: Bereich
- 18: Schlussleuchte
- 19: Bremsleuchte
- 20: Fahrtrichtungsanzeiger
- 21: Rückfahrleuchte
- 22: Nebelschlussleuchte
- 23: Abdeckung
- 24: Längsmittelebene
- 25: Teilbereich
- 26: Rückfahrkamera
- 27: Gehäusegrundkörper
- 28: Dichtung
- 29: Reflektor
- 30: mittlere Blickrichtung
- 31: Schnittstelle
- 32: drahtlose Kommunikation
- 33: Anzeigeeinrichtung
- 34: Smartphone
- 35: elektrische Leitung
- 36: elektrische Leitung
- 37: Kameraobjektiv
- 38: Abstand
- 39: Fassung
- 40: Kontakt
- 41: Lastenträger
- 42: Anhängerkupplung
- 43: Anschlusskabel
- 44: Stecker
- 45: Anhängersteckdose
- 46: Kfz-Anhänger
- 47: Sockel
- 48: Kontakt
- 49: Kontakt
- 50: Stecker
- 51: Anschlussleitung
- 52: Abzweigverbinder
- 53: Kabelschuh
- 54: Nachrüstset
- 55: Rückfahrkameragehäuse
- 56: Antenne

## Patentansprüche

1. Rückfahrkamera (26) mit
- einem Kameraobjektiv (37),
- einer Schnittstelle (31) zur drahtlosen Kommunikation (32) von Bildern der Rückfahrkamera (26) an eine externe Bildanzeigeeinrichtung (33),
**gekennzeichnet durch** einen in eine für ein Leuchtmittel (11) einer Rückfahrleuchte (21) einer Rückleuchte (1) eines Kraftfahrzeugs vorgesehene Fassung (39) passenden Sockel (47), der dazu ausgebildet ist, die Rückfahrkamera (26) in der Fassung (39) ortsfest zu lagern und über die Fassung (39) elektrisch zu kontaktieren.

2. Rückfahrkamera (26) nach Anspruch 1, **dadurch gekennzeichnet, dass** eine mittlere Blickrichtung (30) der Rückfahrkamera (26) gegenüber dem Sockel (47) verstellbar ist.

3. Rückfahrkamera (26) nach Anspruch 1 oder 2, **dadurch gekennzeichnet, dass** ein Abstand der Rückfahrkamera (26) zu dem Sockel (47) in einer mittleren Blickrichtung (30) der Rückfahrkamera (26) verstellbar ist.

4. Rückfahrkamera (26) nach einem der Ansprüche 1 bis 3, **dadurch gekennzeichnet, dass** die Schnittstelle (31) eine aus einem Rückfahrkameragehäuse (55) herausführende flexible Antenne aufweist.

5. Nachrüstset (54) zum Nachrüsten einer Rückleuchte mit einer Rückfahrkamera, wobei das Nachrüstset aufweist:
- eine Rückfahrkamera (26) nach einem der Ansprüche 1 bis 4,
- einen Abzweigverbinder (52) und
- eine einerseits mittels des Abzweigverbinders (52) mit einer Fahrlichtleitung verbindbaren und andererseits an eine Fassung für ein Leuchtmittel (11) einer Rückfahrleuchte (21) einer Rückleuchte (1) eines Kraftfahrzeugs anschließbare Anschlussleitung (51).

6. Nachrüstset (54) nach Anspruch 5, **gekennzeichnet durch** eine lichtdurchlässige Abdeckung (23), die mit einer originalen Abdeckung (23) eines Leuchtengehäuses (2) austauschbar ist, wobei die Abdeckung einen farblosen, klaren und unstrukturierten Bereich (16) aufweist, der für eine Rückfahrleuchte (21) in dem Leuchtengehäuse (2) vorgesehen ist.

7. Rückleuchte (1) mit
- einem Leuchtengehäuse (2), das einen Gehäusegrundkörper (27) und eine lichtdurchlässige Abdeckung (23) aufweist,
- einem in dem Leuchtengehäuse (2) angeordneten Leuchtmittel (8-12) und
- einer Rückfahrkamera (26) nach einem der Ansprüche 1 bis 4, die in dem Leuchtengehäuse (2) hinter einem farblosen, klaren und unstrukturierten Bereich (16) der lichtdurchlässigen Abdeckung (23) angeordnet ist,
- wobei der Bereich (16) der Abdeckung (23) für eine Rückfahrleuchte (21) vorgesehen ist, und
- wobei die Rückfahrkamera (26) statt des Leuchtmittels (11) der Rückfahrleuchte (21) in der Fassung (39) für das Leuchtmittel (11) der Rückfahrleuchte (21) ortsfest gelagert und über die Fassung (39) elektrisch kontaktiert ist.

8. Rückleuchte (1) nach Anspruch 7, **dadurch gekennzeichnet, dass** eine mittlere Blickrichtung der Rückfahrkamera (26) unter einem Winkel (39) von 0 bis 45°, vorzugsweise unter einem Winkel (39) von 5° bis 30° zu einer Oberflächennormalen (40) des Bereichs (16) der lichtdurchlässigen Abdeckung (23) ausgerichtet ist.

9. Rückleuchte (1) nach Anspruch 7 oder 8, **dadurch gekennzeichnet, dass** ein Abstand (38) der Rückfahrkamera (26) zu der lichtdurchlässigen Abdeckung (23) gegenüber dem Sockel (47) verstellbar ist.

10. Rückleuchte (1) nach einem der Ansprüche 7 bis 9, **dadurch gekennzeichnet, dass** die Rückfahrkamera (26) in dem Leuchtengehäuse (2) in einem Abstand (38) von 0 bis 5 cm, vorzugsweise in einem Abstand (38) von 1 bis 3 cm hinter der lichtdurchlässigen Abdeckung (23) angeordnet ist.

11. Rückleuchte (1) nach einem der Ansprüche 7 bis 10, **dadurch gekennzeichnet, dass** die Schnittstelle (31) zur drahtlosen Kommunikation (32) der Rückfahrkamera (26) mit einer externen Bildanzeigeeinrichtung (33) in dem Leuchtengehäuse (2) angeordnet ist.

12. Rückleuchte (1) nach einem der Ansprüche 7 bis 11, **gekennzeichnet durch** ein Anschlusskabel (43) mit einem Stecker (44), der zum Einstecken in eine Anhängersteckdose (45) ausgebildet ist.

13. Paar von Rückleuchten (1), von denen mindestens eine nach einem der vorhergehenden Ansprüche 7 bis 12 ausgebildet ist.

14. An ein Kraftfahrzeug anbaubarer Lastenträger (41), insbesondere Fahrradträger, mit einem Paar von Rückleuchten (1) nach Anspruch 13.

15. KFZ-Anhänger (46) mit einem Paar von Rückleuchten (1) nach Anspruch 13.

## Claims

1. Rear view camera (26) comprising
- a camera objective (37),
- an interface (31) for wireless communication (32) of images of the rear view camera (26) to an external image display device (32),
**characterized by** a foot (47) fitting into a socket (39) provided for a lamp (11) of a reversing light (21) of a rear light (1) of a motor vehicle, the foot (47) being provided for mounting the rear view camera (26) in the socket (36) in a spatially fixed way and for electrically contacting to the rear view camera (26) via the socket (39).

2. Rear view camera (26) of claim 1, **characterized in that** a mean viewing direction (30) of the rear view camera (36) is adjustable with regard to the foot (47).

3. Rear view camera (26) of claim 1 or 2, **characterized in that** a distance of the rear view camera (26) to the foot (47) is adjustable in a mean viewing direction (30) of the rear view camera (26).

4. Rear view camera (26) of any of the claims 1 to 3, **characterized in that** the interface (31) comprises a flexible antenna leading out of a rear view camera housing (55).

5. Upgrade kit (54) for upgrading a rear light with a rear view camera, wherein the upgrade kit comprises:
- a rear view camera (26) of any of the claims 1 to 4,
- a branch connector (52) and
- a connection line (51) that is connectable to a driving light line via the branch connector, on the hand, and to a socket for a lamp (11) of a reversing light (21) of a rear light (1) of a motor vehicle, on the other hand.

6. Upgrade kit (54) of claim 5, **characterized by** a light-transparent cover (23) which is exchangeable with an original cover (23) of a lamp housing (2), wherein the cover has a colourless, clear and unstructured area (16) which is provided for a reversing light (21) in the lamp housing (2).

7. Rear light (1) comprising
- a lamp housing (2), which has a lamp housing base body (27) and a light transparent cover (23),
- lamps (8-12) arranged in the lamp housing (2), and
- a rear view camera (26) according to any of the claims 1 to 4, which is arranged in the lamp housing (2) behind a colourless, clear and unstructured area (16) of the light transparent cover (23),
- wherein the area (16) of the cover (23) is provided for a reversing light (21), and
- wherein, instead of the lamp (11) of the reversing light (21), the rear view camera (26) is mounted in the socket (39) for the lamp (11) of the reversing light (21) in a spatially fixed way and electrically contacted via the socket (39).

8. Rear light (1) of claim 7, **characterized in that** a mean viewing direction of the rear view camera (26) is arranged at an angle (39) from 0° to 45°, preferably at an angle (39) from 5° to 30° to a surface normal (40) of the area (16) of the light transparent cover (23).

9. Rear light (1) of claim 7 or 8, **characterized in that** a distance (38) of the rear view camera (26) to the light transparent cover (23) is adjustable with regard to the socket (47).

10. Rear light (1) of any of the claims 7 to 9, **characterized in that** the rear view camera (26) is arranged in the lamp housing behind the light transparent cover (23) at a distance (38) from 0 to 5 cm, preferably at a distance (38) from 1 to 3 cm.

11. Rear light (1) of any of the claims 7 to 10, **characterized in that** the interface (31) for wireless communication (32) of the rear view camera (26) with the external image display device (23) is arranged within the lamp housing (2).

12. Rear light (1) of any of the claims 7 to 11, **characterized by** a connector cable (43) comprising a connector (44) which is provided for being plugged into a trailer socket (45).

13. Pair of rear lights (1), at least one of which being configured according to any of the preceding claims 7 to 12.

14. Load carrier (41), particularly bicycle carrier, mountable to a motor vehicle and comprising a pair of rear lights (1) of claim 13.

15. Motor vehicle trailer (46) comprising a pair of rear lights (1) of claim 13.

## Revendications

1. Caméra de recul (26) avec
- un objectif de caméra (37),
- une interface (31) de communication sans fil (32) d'images provenant de la caméra
de recul (26) vers un dispositif d'affichage d'images externe (33), **caractérisée par** un socle (47) qui s'adapte à une douille (39) prévue pour une source lumineuse (11) d'un feu de recul (21) d'un feu arrière (1) d'un véhicule automobile, qui est conçu pour installer la caméra de recul (26) de manière fixe dans la douille (39) et être mis en contact électriquement via la douille (39).

2. Caméra de recul (26) selon la revendication 1, **caractérisée en ce qu'**une direction de vue centrale (30) de la caméra de recul (26) est réglable par rapport au socle (47).

3. Caméra de recul (26) selon la revendication 1 ou 2, **caractérisée en ce qu'**une distance de la caméra de recul (26) par rapport au socle (47) dans une direction de vue centrale (30) de la caméra de recul (26) est réglable.

4. Caméra de recul (26) selon l'une des revendications 1 à 3, **caractérisée en ce que** l'interface (31) présente une antenne flexible sortant d'un boîtier de caméra de recul (55).

5. Kit d'équipement (54) pour équiper un feu arrière avec une caméra de recul, le kit d'équipement comprenant :
- une caméra de recul (26) selon l'une des revendications 1 à 4,
- un connecteur de dérivation (52) et
une ligne de raccordement (51) qui, d'un côté, peut être reliée à une ligne de feux de route au moyen du connecteur de dérivation (52) et, de l'autre côté, peut être raccordée à une douille pour une source lumineuse (11) d'un feu de recul (21) d'un feu arrière (1) de véhicule automobile.

6. Kit d'équipement (54) selon la revendication 5, **caractérisé par** un couvercle translucide (23) qui peut être remplacé par un couvercle d'origine (23) d'un corps du de luminaire (2), le couvercle présentant une zone (16) incolore, claire et non structurée, qui est prévu pour un feu de recul (21) dans le corps de luminaire (2).

7. Feu arrière (1) avec
- un corps de luminaire (2) qui possède un corps de boîtier de base (27) et un couvercle translucide (23),
- une source lumineuse (8-12) agencée dans le corps de luminaire (2) et
- une caméra de recul (26) selon l'une des revendications 1 à 4, qui est agencée dans le corps de luminaire (2) derrière une zone incolore, claire et non structurée (16) du couvercle translucide (23),
- la zone (16) du couvercle (23) étant prévue pour un feu de recul (21), et la caméra de recul (26) étant, à la place de la source lumineuse (11) du feu de recul (21), installée de manière fixe dans la douille (39) pour la source lumineuse (11) du feu de recul (21) et mise en contact électriquement via la douille (39).

8. Feu arrière (1) selon la revendication 7, **caractérisé en ce qu'**une direction de vue moyenne de la caméra de recul (26) est orientée à un angle (39) de 0 à 45°, de préférence à un angle (39) de 5° à 30° par rapport à une surface normale (40) de la zone (16) du couvercle translucide (23).

9. Feu arrière (1) selon la revendication 7 ou 8, **caractérisé en ce qu'**une distance (38) de la caméra de recul (26) est réglable par rapport au couvercle transmettant la lumière (23) contre le socle (47).

10. Feu arrière (1) selon l'une des revendications 7 à 9, **caractérisé en ce que** la caméra de recul (26) est agencée dans le corps de luminaire (2) à une distance (38) de 0 à 5 cm, de préférence à une distance (38) de 1 à 3 cm derrière le couvercle translucide (23).

11. Feu arrière (1) selon l'une des revendications 7 à 10, **caractérisé en ce que** l'interface (31) de communication sans fil (32) de la caméra de recul (26) est agencée dans le corps de luminaire (2) avec un dispositif externe d'affichage d'images (33).

12. Feu arrière (1) selon l'une des revendications 7 à 11, **caractérisé par** un câble de connexion (43) avec une fiche (44) qui est conçue pour être enfichée dans une prise de remorque (45).

13. Paire de feux arrière (1), dont au moins un est conçu selon l'une des revendications précédentes 7 à 12.

14. Porte-bagages (41), en particulier porte-vélos, pouvant être fixé sur un véhicule automobile et comportant une paire de feux arrière (1) selon la revendication 13.

15. Remorque de véhicule automobile (46) avec une paire de feux arrière (1) selon la revendication 13.
